# EUROPEAN PATENT SPECIFICATION

(11) **EP 1 862 390 B1**
(45) Date of publication and mention of the grant of the patent: **03.03.2010**
(21) Application number: 07107661.6
(22) Date of filing: 08.05.2007
(51) Int. Cl.: B65B 61/06

(54) **Method for producing blisters, strips, pouches, trays for vials and the like**
Verfahren zur Herstellung von Blistern, Streifen, Beuteln, Ampullenhaltern und dergleichen
Procédé de production de cloques, bandes, poches, plateaux pour fioles et similaires

(30) Priority: 31.05.2006 IT BO20060427
(43) Date of publication of application: 05.12.2007
(73) Proprietor: A.M.R.P. Handels AG, 4012 Basel (CH)
(72) Inventor: Martelli, Guglielmo, 1884 Villars sur Ollon (CH)
(74) Representative: Modiano, Micaela Nadia

(56) References cited:
- WO-A-97/31827
- CH-A5- 582 604
- DE-A1- 1 461 955
- DE-A1- 3 526 087
- DE-A1- 10 054 986

## Description

The present invention relates to a method for producing blisters, strips, pouches, trays for vials and the like.

Currently, items such as blisters, strips, pouches, trays for vials and the like, adapted to package for example pharmaceutical products or other products (generically referenced hereinafter as blisters), are produced industrially by means of automatic thermoforming machines, provided with at least one cutting device of a traditional type which divides a single ribbon of appropriate width into a certain number of blanks which will then constitute the individual blisters.

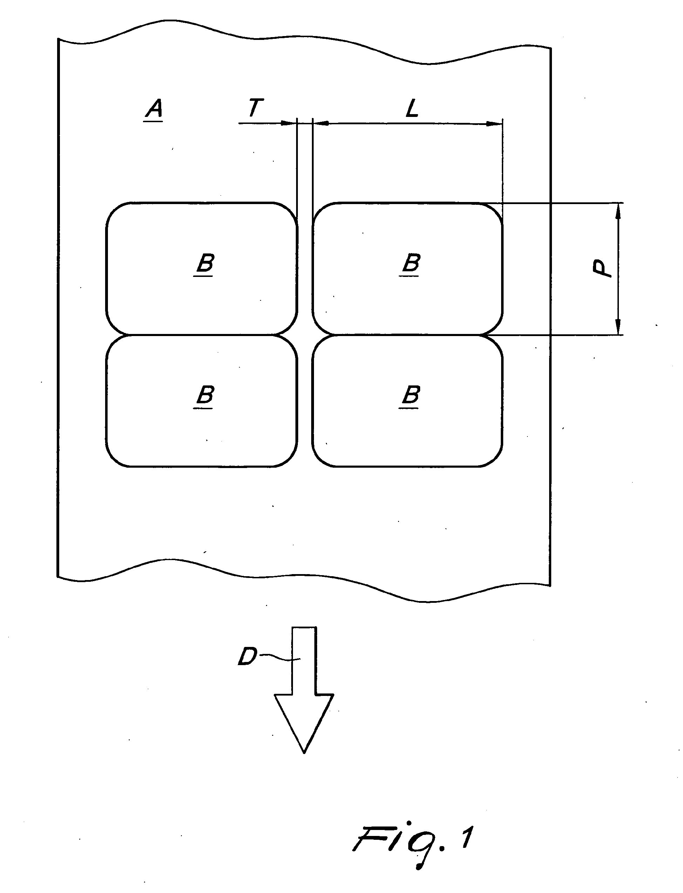

Automatic machines usually use a traditional method to cut the individual blanks, which is described briefly hereinafter with particular reference to Figure 1 of the accompanying drawings.

The production process generally starts from a single ribbon A, which contains along its width one or more blanks B formed previously. In greater detail, Figure 1 is a view of a typical arrangement of the blanks to be provided, in which four blanks are arranged two by two transversely in a ribbon which has a length L and a width P.

A cutter of a traditional type separates the blanks B from the ribbon A typically according to two methods. The first method consists in producing a plurality of longitudinal and transverse cuts: the longitudinal cuts are usually produced by means of rotary blades or the like and the transverse cuts are instead produced by means of shears. The second method instead uses punch and die means, which are sized and shaped appropriately so as to allow to extract the individual blanks B from the ribbon A, i.e., the shaded regions shown in Figure 1.

However, in both cases the production of blisters and the like is not free from drawbacks of various kinds.

By using the first method, the blanks in fact have sharp corners which can be unpleasant and unwelcome and further cause the blanks to be of poor quality.

By using the second method, instead, first of all there are very high costs for the production of the cutter (punch and die), with long times for working the components due to the complex geometries and to the treatments to which some parts of the cutter must be subjected.

Secondly, moreover, maintenance of the cutter, i.e., the sharpening of some components, is an operation which causes long downtimes of the machine and requires the intervention of specialized technicians.

Thirdly, changing the format of the cutter is rather difficult due to the substantial weight of the device.

Fourthly, it is necessary to use different cutting devices to produce blisters of different formats, with a consequent cost of additional equipment, which is a multiple of, and related to, the number of cutters required to cover the range of shapes that is required: further, in this manner the construction times of the complete formats also increase. Finally, this last drawback makes it problematic and bulky to store the components of the formats, to an extent which of course increases in relation to the number of units required.

CH 582 604 discloses a method for separating form filled packages as defined in the precharacterizing portion of the appended claim 1.

The aim of the present invention is to obviate the above-mentioned drawbacks, by providing a method for producing blisters, trays for vials and the like which allows to provide blanks for very type of format at a distinctly lower production cost than that which characterizes the use of traditional technologies.

Within this aim, an object of the present invention is to provide a method for producing blisters, trays for vials and the like which allows to abandon the concept of format changing, intended traditionally as the replacement of a device, resorting instead to simple mechanical adjustments.

Another object of the present invention is to provide a method which is simple, relatively easy to provide in practice, safe in use, effective in operation, and has a relatively low cost.

In accordance with the invention, there is provided a method for producing blisters, obtained starting from at least one ribbon, as defined in the appended claims.

Further characteristics and advantages of the invention will become better apparent from the following detailed description of a preferred but not exclusive embodiment of a method for producing blisters and the like according to the invention, illustrated by way of non-limiting example in the accompanying drawings, wherein:
Figure 1 is a schematic view of a portion of ribbon from which the blisters are obtained according to the traditional background art;
Figure 2 is a schematic view of a portion of ribbon from which the blisters are obtained by applying the method according to the invention;
Figure 3 is a schematic detail view of one of the openings provided along the ribbon in a first embodiment;
Figure 3a is a schematic detail view of one of the openings provided along the ribbon in a second embodiment;
Figure 4 is a schematic view of a portion of ribbon in a third embodiment of the method according to the invention.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

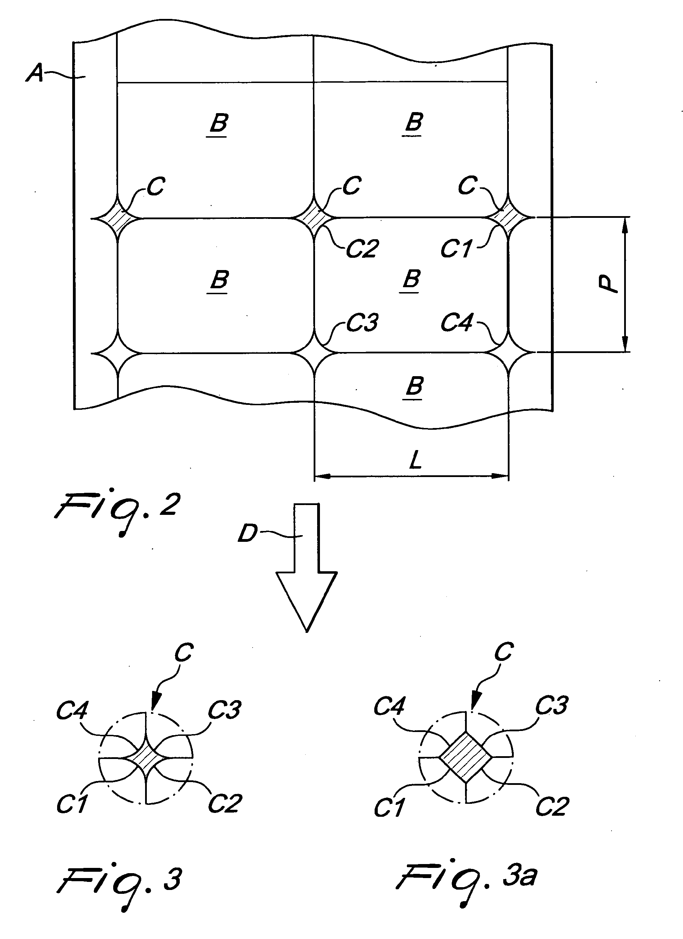

Figure 2 schematically illustrates the application of the method for providing blisters according to the invention.

It is specified that in the present description, reference is made generally to the production of blisters. However, the term "blister" is to be broadly construed, as including any packaging product with plural accommodation sites such as pouches, strips, trays for vials and the like that might be made with the method of the invention depending on the circumstances.

According to this method, a plurality of openings C (shaded areas) are in fact provided advantageously along a single ribbon A made of a material which is chosen appropriately in relation to specific requirements, in a direction which is substantially transverse to the advancement direction D of the ribbon along the feeding/processing direction such as for punching said openings C being distributed and arranged on the ribbon A in relation to the number of blisters to be produced per unit surface of the ribbon A.

The openings C constitute exact references for separating simply and effectively the individual blanks B and also allow to feed the ribbon A and to check the correct arrangement of the ribbon A and its centering with respect to the transverse and longitudinal blades.

The openings C are provided along the ribbon A preferably (but not exclusively) by punching, using therefore adapted punch means, that may act on a vertical direction with respect to the plane of Figure 2, and which can be of a substantially known type or can be specific as regards the punching configuration/shape for a particular application.

In practice, the punching operation allows to provide on the ribbon A a variable number of openings C (three in the example shown in Figure 2), which are substantially aligned transversely with respect to said ribbon.

As can be seen again in Figure 2, the openings C are distributed along the ribbon A in rows of three which are mutually substantially equidistant according to a predefined distance, indicated by P; the openings C are further mutually transversely equidistant according to a preset distance indicated by L.

Once the openings C have been provided along the ribbon A, it is possible to provide subsequent steps for the execution of longitudinal and transverse cuts along said ribbon, so as to separate the individual blanks.

Each of the longitudinal cuts, which are parallel to each other and in turn are parallel to the advancement direction D of the ribbon A, lies between each opening C and the directly adjacent one in a longitudinal direction, so as to mutually join them. Said longitudinal cuts are preferably provided by means of first blades, not shown for the sake of simplicity in the schematic figure but of a substantially traditional type, with or without waste.

Likewise, the transverse cuts are provided by means of second blades (not shown in the figures), which define the complete contour of the blanks B, separating them from the ribbon A, with or without waste.

As mentioned earlier, the openings C provided with the method according to the invention are advantageously adapted to constitute locator points for elements for feeding the ribbon A along its advancement direction D, said feeding elements being preferably provided with teeth which enter the openings C, causing the ribbon to advance.

In a first exemplary embodiment of the method according to the invention (Figure 3), each opening C has a respective closed contour, which is constituted advantageously by the edges of the corners C1, C2, C3, C4 of adjacent blanks, said corners in the case of Figure 2 being rounded and provided by means of a substantially diamond-shaped punch.

In a second exemplary embodiment of the method according to the invention (Figure 3a), the profile of the corners C1, C2, C3, C4 is instead substantially lozenge-shaped; however, it is noted that the shape of the punch can be any according to requirements. More particularly, it is possible to provide openings C, and therefore punches, having a differentiated shape on a same ribbon A; for example, the openings C located on the inside can be lozenge-shaped, while the ones on the outside can be half-lozenge shaped, or the like, so as to optimize the use of material.

The profiles of the openings C described above are particularly advantageous, because they allow to eliminate sharp corners, which are aesthetically unpleasant, irritating to the touch and dangerous for children.

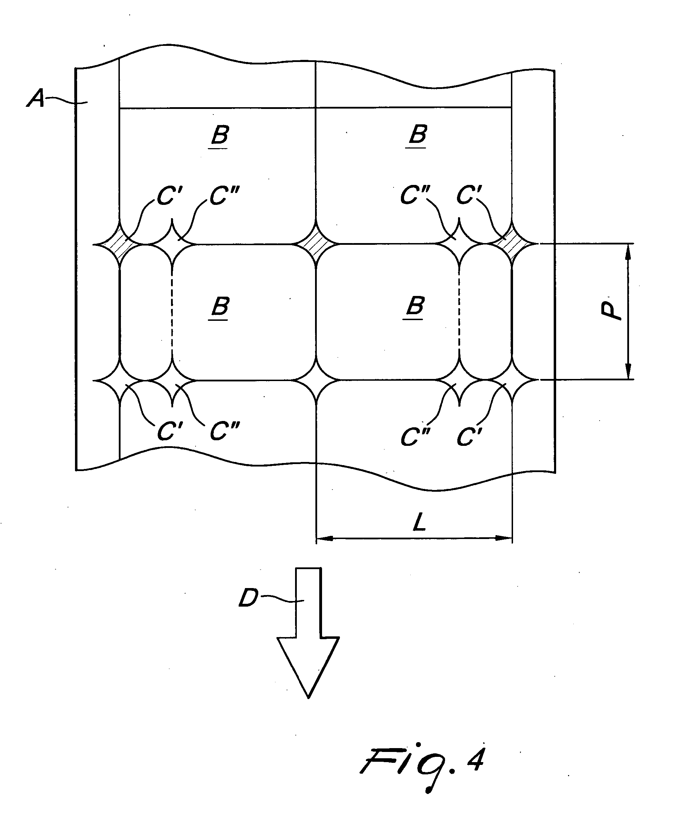

In some particular production situations, the distances P and L between the openings C can be provided so that they are not constant but variable in relation to specific requirements. In order to better understand this, reference should be made to Figure 4, which relates to a third exemplary embodiment: it shows a ribbon A in which there are openings designed for cutting, designated by the reference letter C', which are mutually equidistant and define the contours of the blisters, and openings designed to form tearing points of said blister, designated by C"; the openings C" are arranged at a certain distance, which is conveniently set, with respect to the openings intended for cutting C'.

In this case an opening selection step that comprises division of the overall number of openings according to their intended purpose is carried out, in order to establish the specific distance P, L between the openings to be cut in the ribbon A.

The method according to the invention has another important advantage, which substantially consists in eliminating the so-called downtimes between the design and the order to produce the parts that compose the cutter. It is in fact usually not possible to begin the construction of the details of the cutter without defining completely the geometry and the dimensions of the blanks to be obtained. The method according to the invention eliminates these times, since the geometry and dimensions of the blanks are defined simply by adjusting mechanically the positions of the punches with respect to the ribbon A, without replacing parts and resorting to the sharpening of the punches only when necessary.

Further, the punch magazine is also extremely compact, since said punches are adapted to be used to provide blanks of various shapes and sizes.

The method according to the invention ensures a significant reduction in downtimes, since the disassembly of the punches for sharpening or replacement is a much faster operation than the replacement or sharpening of an entire cutting device in all of its parts.

Another advantage provided by the application of the method according to the invention is the great saving of packaging material. It is in fact possible to eliminate, with blades which form no waste, the distance indicated by T in Figure 1 between two adjacent blanks in a transverse direction, which is needed to define completely the outlines of said blanks, while traditional cutters allow to eliminate the distance between two adjacent figures only in a longitudinal direction. The same applies also for cutting between two consecutive blanks. When using blades with waste, instead, the distance T is in any case rendered minimal so as to optimize the use of the material of the ribbon A.

Another advantage that arises from the application of the method is the possibility to exit from the thermoforming machine directly with the ribbon A affected by, be provided with, the openings C, which at this point contains the blanks B without waste, to then guide it to the inlet of the machine located downstream. The openings C can in fact act advantageously as guiding locators, adapted to be coupled to appropriately provided feeder means: further, they also conveniently center the ribbon A with respect to the longitudinal and transverse blades. This last advantage can be exploited particularly in the field of the production of strips, where it is advisable, due to known storage problems linked to the use of conveyor belts, to obtain the blanks from the ribbon proximate to the machine arranged downstream of the packaging machine. Again as regards strips, said strips can also be provided without sharp corners simply and without resorting to complicated mechanical parts.

Another important advantage of the present method consists in eliminating the timing errors between the heat-sealing of the materials that constitute the blister, strip or the like (for example plastic material and aluminum) and the printing performed thereon. It is in fact thus possible to adjust the synchronization between the punches and the heat-sealing unit, thus eliminating the typical offset between the heat seal and the centering of the print, ensuring a transverse cut which is always centered in the heat-sealing region between two consecutive blanks.

It has thus been shown that the invention achieves the intended aim and objects.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

The disclosures in Italian Patent Application No. BO2006A000427 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for producing blisters, strips, pouches, trays for vials and the like, obtained starting from at least one ribbon (A), comprising:
at least one step for providing a plurality of openings (C) in said ribbon (A) in predefined areas which are distributed so as to form between them a plurality of blanks (B) which are designed to constitute the outlines of the blisters; and
at least one step for separating said blanks (B) from said ribbon (A); the method being **characterized in that** it further comprises:
the step of feeding and centering said ribbon (A) along its advancement direction (D) by coupling feeder means to said openings (C) that constitute guiding locators for feeding elements of said feeder means.

2. The method according to claim 1, comprising feeding and centering said ribbon (A) by means of teeth of said feeding elements that enter said openings (C).

3. The method according to claims 1 and 2, **characterized in that** said openings (C) are substantially equidistant in a transverse direction with respect to the advancement direction (D) of said ribbon (A).

4. The method according to claims 1 and 2, **characterized in that** said openings (C) are divided into openings designed for cutting (C'), which are mutually substantially equidistant, and openings adapted to form tearing points (C"), which are arranged at a preset distance with respect to said openings designed for cutting (C').

5. The method according to one or more of the preceding claims, **characterized in that** said openings (C) are substantially mutually equidistant in a longitudinal direction which is parallel to said advancement direction (D) of said ribbon (A).

6. The method according to one or more of the preceding claims, **characterized in that** said openings (C) are produced by punching.

7. The method according to one or more of the preceding claims, **characterized in that** the closed contour of each of said openings (C) is constituted by the edges of the corners (C1, C2, C3, C4) of adjacent blanks (B).

8. The method according to one or more of the preceding claims, **characterized in that** each of said openings (C) is substantially diamond-shaped, its sides being constituted by said corners (C1, C2, C3, C4) of adjacent blanks (B).

9. The method according to one or more of the preceding claims, **characterized in that** each of said openings (C) is substantially lozenge-shaped, its sides being constituted by said corners (C1, C2, C3, C4) of adjacent blanks (B).

## Patentansprüche

1. Verfahren zum Herstellen von Blistern, Streifen, Beuteln, Ampullenhaltem und dergleichen, die ausgehend von zumindest einem Band (A) hergestellt werden, umfassend:
zumindest einen Schritt zum Bereitstellen einer Vielzahl von Öffnungen (C) in dem Band (A) in vorbestimmten Bereichen, die so verteilt sind, dass zwischen ihnen eine Vielzahl von Vorformen (B) gebildet wird, die so ausgelegt sind, dass sie die Konturen der Blister definieren, und
zumindest einen Schritt zum Trennen der Vorformen (B) von dem Band (A),
wobei das Verfahren **dadurch gekennzeichnet ist, dass** es ferner umfasst: den Schritt des Transportierens und Zentrierens des Bandes (A) entlang seiner Förderrichtung (D) durch Koppeln von Transportmitteln an die Öffnungen (C), die Leitpositionierhilfen für Transportelemente der Transportmittel darstellen.

2. Verfahren nach Anspruch 1, das das Transportierten und Zentrieren des Bandes (A) durch in die Öffnungen (C) tretende Zähne der Transportelemente umfasst.

3. Verfahren nach den Ansprüchen 1 und 2, **dadurch gekennzeichnet, dass** die Öffnungen (C) in einer Querrichtung bezüglich der Förderrichtung (D) des Bandes (A) im Wesentlichen gleich beabstandet sind.

4. Verfahren nach den Ansprüchen 1 und 2, **dadurch gekennzeichnet, dass** die Öffnungen (C) in zum Schneiden bestimmte Öffnungen (C'), die voneinander im Wesentlichen gleich beabstandet sind, und zum Bilden von Reißstellen geeignete Öffnungen (C"), die in einem vorgegebenen Abstand bezüglich den zum Schneiden bestimmten Öffnungen (C') angeordnet sind, unterteilt sind.

5. Verfahren nach einem oder mehreren der vorhergehenden Ansprüche, **dadurch gekennzeichnet, dass** die Öffnungen (C) in einer Längsrichtung, die parallel zur Förderrichtung (D) des Bandes (A) ist, voneinander im Wesentlichen gleich beabstandet sind.

6. Verfahren nach einem oder mehreren der vorhergehenden Ansprüche, **dadurch gekennzeichnet, dass** die Öffnungen (C) durch Stanzen erzeugt werden.

7. Verfahren nach einem oder mehreren der vorhergehenden Ansprüche, **dadurch gekennzeichnet, dass** die geschlossene Kontur jeder der Öffnungen (C) durch die Kanten der Ecken (C1, C2, C3, C4) aneinander grenzender Vorformen (B) gebildet wird.

8. Verfahren nach einem oder mehreren der vorhergehenden Ansprüche, **dadurch gekennzeichnet, dass** jede der Öffnungen (C) im Wesentlichen diamantförmig ist, wobei ihre Seiten durch die Ecken (C1, C2, C3, C4) aneinander grenzender Vorformen (B) gebildet werden.

9. Verfahren nach einem oder mehreren der vorhergehenden Ansprüche, **dadurch gekennzeichnet, dass** jede der Öffnungen (C) im Wesentlichen rautenförmig ist, wobei ihre Seiten durch die Ecken (C1, C2, C3, C4) aneinander grenzender Vorformen (B) gebildet werden.

## Revendications

1. Procédé pour produire des emballages à coque, des bandes, des pochettes, des plateaux pour flacons, et analogues, obtenus à partir d'au moins un ruban (A), comprenant :
au moins une étape pour réaliser une pluralité d'ouvertures (C) dans ledit ruban (A) dans des zones prédéfinies qui sont réparties de façon à former entre elles une pluralité d'ébauches (B) qui sont conçues de façon à constituer les contours des emballages à coque ; et
au moins une étape de séparation desdites ébauches (B) à partir dudit ruban (A) ;
le procédé étant **caractérisé en ce qu'**il comprend de plus :
l'étape consistant à faire avancer et à centrer ledit ruban (A) le long de sa direction d'avance (D) en couplant des moyens d'avance auxdites ouvertures (C), qui constituent des éléments de localisation de guidage pour des éléments d'avance desdits moyens d'avance,

2. Procédé selon la revendication 1, comprenant l' avance et le centrage dudit ruban (A) à l' aide de dents desdits éléments d'avance qui entrent dans lesdites ouvertures (C).

3. Procédé selon les revendications 1 et 2, **caractérisé en ce que** lesdites ouvertures (C) sont sensiblement équidistantes dans une direction transversale à la direction d'avance (D) dudit ruban (A).

4. Procédé selon les revendications 1 et 2, **caractérisé en ce que** lesdites ouvertures (C) sont divisées en ouvertures conçues pour la coupe (C'), qui sont sensiblement mutuellement équidistantes, et en ouvertures adaptées pour former des points de déchirure (C"), qui sont disposées à une distance prédéfinie desdites ouvertures conçues pour la coupe (C').

5. Procédé selon l'une ou plusieurs des revendications précédentes, **caractérisé en ce que** lesdites ouvertures (C) sont sensiblement mutuellement équidistantes dans une direction longitudinale qui est parallèle à ladite direction d'avance (D) dudit ruban (A).

6. Procédé selon l'une ou plusieurs des revendications précédentes, **caractérisé en ce que** lesdites ouvertures (C) sont produites par estampage.

7. Procédé selon l'une ou plusieurs des revendications précédentes, **caractérisé en ce que** le contour fermé de chacune desdites ouvertures (C) est constitué par les bords des coins (C1, C2, C3, C4) d'ébauches adjacentes (B).

8. Procédé selon l'une ou plusieurs des revendications précédentes, **caractérisé en ce que** chacune desdites ouvertures (C) est sensiblement en forme de diamant, ses côtés étant constitués par lesdits coins (C1, C2, C3, C4) d'ébauches adjacentes (B).

9. Procédé selon l'une ou plusieurs des revendications précédentes, **caractérisé en ce que** chacune desdites ouvertures (C) est sensiblement en forme de losange, ses côtés étant constitués par lesdits coins (C1, C2, C3, C4) d'ébauches adjacentes (B).
